# FASCICULE DE BREVET EUROPEEN

(11) **EP 2 376 266 B1**
(45) Date de publication et mention de la délivrance du brevet: **16.03.2016**
(21) Numéro de dépôt: 09795369.9
(22) Date de dépôt: 02.12.2009
(51) Int. Cl.: B29C 31/00, B29C 33/30, B29C 69/00, B29L 31/56

(54) **SYSTEME DE MOULAGE ET D'EMBOÎTEMENT**
FORM- UND AUFSTECK-SYSTEM
MOULDING AND FITTING SYSTEM

(30) Priorité: 12.12.2008 FR 0858518
(43) Date de publication de la demande: 19.10.2011
(73) Titulaire: Moulindustrie, 14350 Sainte Marie Laumont (FR)
(72) Inventeur: MOULIN, Jacky, F-14350 Sainte Marie Laumont (FR)
(74) Mandataire: Maillet, Alain
(86) Numéro de dépôt international: PCT/EP2009/066269
(87) Numéro de publication internationale: WO 2010/066622

(56) Documents cités:
- EP-A- 2 042 289
- WO-A-02/28622
- WO-A-2004/026562
- FR-A- 2 294 041
- US-A1- 2004 222 559
- US-A1- 2006 151 909

## Description

La présente invention concerne un système de moulage et d'emboîtement de deux pièces.

Un capuchon du type capuchon pour une bouteille contenant un produit liquide comme du shampoing, de l'après-shampoing, du produit vaisselle ou autres, comporte généralement un corps et un opercule. Le corps est destiné à s'emboîter sur la bouteille et l'opercule est destiné à être manoeuvré d'une position de fermeture vers une position d'ouverture et vice-versa pour permettre la retenue du produit dans la bouteille ou son écoulement hors de la bouteille.

De tels capuchons peuvent être également utilisés dans d'autres secteurs comme par exemple, l'automobile ou dans le domaine médical.

La réalisation d'un tel capuchon comprend une étape de moulage du corps et une étape de moulage de l'opercule. Le corps et l'opercule sont alors dirigés vers un poste d'emboîtement où un corps et un opercule sont emboîtés l'un dans l'autre avant d'être fixés sur le col d'une bouteille.

Le document EP-A-2042289 est considéré comme représentant l'état de la technique le plus pertinant.

La réalisation d'un composant constitué de deux pièces moulées emboîtées, comme par exemple un capuchon, nécessite un poste de moulage d'une première pièce (l'opercule), un poste de moulage d'une deuxième pièce (le corps) et un poste d'emboîtement de la première pièce et de la deuxième pièce. Le coût financier de tels postes est souvent élevé et la multiplication des étapes augmente le temps de fabrication.

5 Un objet de la présente invention est de proposer un système de moulage et d'emboîtement de deux pièces qui ne présente pas les inconvénients de l'art antérieur.

Cet object peut être atteint par un système comme défini dans la revendication 1.

A cet effet, est proposé un système de moulage et d'emboîtement d'une première pièce et d'une deuxième pièce par exemple du type opercule et corps d'un capuchon, le système de moulage et d'emboîtement comprenant :
- au moins deux rails de guidage parallèles,
- pour chaque rail de guidage, un chariot monté mobile en translation sur le rail de guidage entre une butée aval et une butée amont,
- au moins une série de premières empreintes, chaque première empreinte étant destinée à mouler une des premières pièces, chaque série de premières empreintes 15 étant portée par une barre d'assemblage,
- pour la ou chaque barre d'assemblage et pour chaque chariot, un engrenage de manoeuvre monté sur ledit chariot et mobile en rotation autour d'un axe de rotation perpendiculaire à la direction de déplacement des chariots, ladite barre d'assemblage étant montée sur chacun des engrenages de manoeuvre,
- pour la ou chaque série de premières empreintes, une série de deuxièmes empreintes, chaque deuxième empreinte étant destinée à mouler une des deuxièmes pièces,
- chaque barre d'assemblage étant mobile en rotation entre une première position dans laquelle chaque première série d'empreintes n'est pas en vis-à-vis de la série de deuxièmes empreintes correspondante et une deuxième position dans laquelle chaque première série d'empreintes est en vis-à-vis de la série de deuxièmes empreintes correspondante, et chaque série de deuxièmes empreintes étant montée mobile entre une position basse dans laquelle la première pièce et la deuxième pièce ne sont pas emboîtées et une position haute dans laquelle la première pièce et la deuxième pièce 30 sont emboîtées,
- pour chaque chariot, une crémaillère prévue pour se déplacer parallèlement audit rail de guidage et pour engrener le ou les engrenages de manoeuvre dudit chariot,
- pour chaque chariot, un dispositif de verrouillage prévu pour verrouiller ledit chariot alternativement avec la crémaillère et le rail de guidage,
- pour chaque crémaillère, un dispositif d'activation prévu pour déplacer ladite crémaillère.

Avantageusement, le dispositif de verrouillage comprend un loquet, une première rainure de verrouillage réalisée sur la crémaillère et une deuxième rainure de verrouillage réalisée sur le rail de guidage, et le loquet est prévu pour s'engager alternativement dans la première rainure de verrouillage ou la deuxième rainure de verrouillage.

Avantageusement, le loquet prend la forme d'un élément oblong et lorsque une première extrémité rayonnée coopère avec la première rainure de verrouillage, la deuxième extrémité rayonnée est en appui sur une surface du rail de guidage, et lorsque la deuxième extrémité rayonnée coopère avec la deuxième rainure de verrouillage, la première extrémité rayonnée est en appui sur une surface de la crémaillère.

Avantageusement, chaque dispositif d'activation est un vérin pneumatique.

Avantageusement, les premières pièces ou les deuxièmes pièces sont des opercules d'un capuchon et, respectivement, les deuxièmes pièces ou les premières pièces sont des corps du capuchon.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de moulage et d'emboîtement de deux pièces selon l'invention,
les Figs. 2 à 9 représentent les différentes étapes de fonctionnement du système de moulage et d'emboîtement de deux pièces selon l'invention,
la Fig. 10 représente un mode de réalisation d'empreintes de moulage pour un capuchon, et
la Fig. 11 montre un système de moulage et d'emboîtement de deux pièces selon un autre mode de réalisation de l'invention.

L'invention va être plus particulièrement décrite dans le cas d'un capuchon constitué d'un corps et d'un opercule.

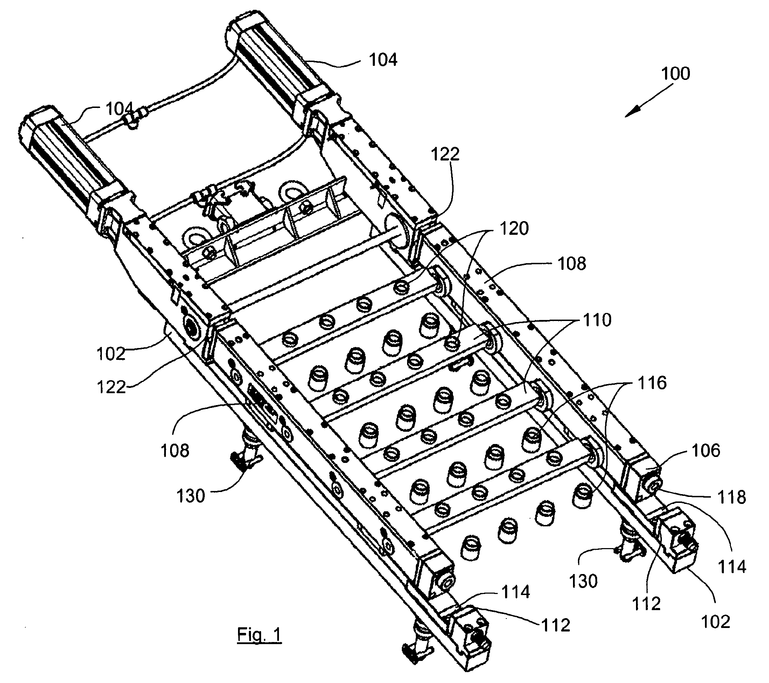

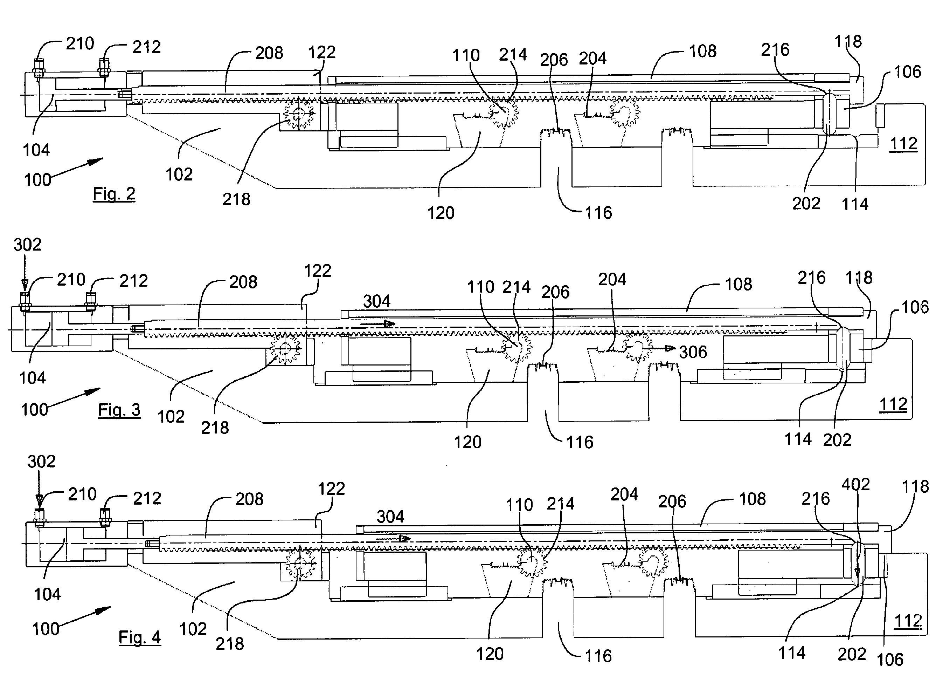

La Fig. 1 représente un système de moulage et d'emboîtement 100 d'une première pièce et d'une deuxième pièce, comme par exemple un opercule 204 (Fig. 2) et un corps 206 (Fig. 2) d'un capuchon.

Le système de moulage et d'emboîtement 100 comprend une base constituée principalement de deux rails de guidage 102 parallèles. Chaque rail de guidage 102 est monté ici sur deux barres de solidarisation 130 qui permettent de solidariser le système de moulage et d'emboîtement 100 avec un ensemble presse à injection et moule.

Dans le mode de réalisation de l'invention présenté sur les Figs., il y a deux rails de guidage, mais dans le cas de pièces à mouler de grandes tailles, il est possible de prévoir des rails de guidage supplémentaires.

Le système de moulage et d'emboîtement 100 comprend, pour chaque rail de guidage 102, un chariot mobile 108. Chaque chariot 108 est mobile en translation longitudinalement le long du rail de guidage 102 considéré entre une butée aval 122 et une butée amont 112. Chaque chariot 108 est guidé en translation sur le rail de guidage 102 considéré par tous dispositifs adéquats et les butées 112 et 122 sont disposées de manière à autoriser le déplacement de chaque chariot 108 sur une distance appropriée comme cela sera mieux compris par la suite.

Les deux chariots 108 sont disposés l'un en face de l'autre et sont reliés entre eux par une ou plusieurs barres d'assemblage 110. Chaque barre d'assemblage 110 prend la forme d'une poutre rectiligne qui s'étend entre les deux chariots 108 perpendiculairement à la direction de déplacement des chariots 108. Le nombre de barres d'assemblage 110 varie en fonction du nombre de lignes de capuchons qui sont moulés simultanément par la presse à injection. Ici quatre barres d'assemblage 110 sont représentées sur la Fig. 1 et deux sont représentées sur les Figs. 2 à 9.

Chaque barre d'assemblage 110 porte une série de premières empreintes de moulage 120 et forme avec elle un ensemble rigide. Chaque première empreinte de moulage 120 est destinée à mouler un opercule 204.

Le système de moulage et d'emboîtement 100 comprend pour chaque série de premières empreintes 120, une série de deuxièmes empreintes de moulage 116 disposée entre les deux chariots 108, chacune des deuxièmes empreintes 116 étant destinée à mouler le corps 206. Pour chaque capuchon, une première empreinte 120 est associée à une deuxième empreinte 116.

Chaque barre d'assemblage 110 est montée mobile en rotation autour d'un axe de rotation parallèle à la direction longitudinale de la barre d'assemblage 110. En d'autres termes, l'axe de rotation est perpendiculaire à la direction de déplacement des chariots 108.

Comme cela est mieux vu sur les Figs. 2 à 9, pour chaque série de premières empreintes 120 et sur chaque chariot 108, un engrenage de manoeuvre 214 est monté mobile en rotation autour de l'axe de rotation. Chaque extrémité de chaque barre d'assemblage 110 et donc de chaque première empreinte de moulage 120 est fixée sur l'engrenage de manoeuvre 214 considéré. Chaque engrenage de manoeuvre 214 est mobile en rotation autour de son axe qui constitue l'axe de rotation. Chaque barre d'assemblage 110 est donc soumise à un mouvement de rotation autour de l'axe des engrenages de manoeuvre 214 qui la porte. Comme cela est expliqué ci-après, chaque barre d'assemblage 110 et donc chaque engrenage de manoeuvre 214 et chaque série de premières empreintes 120 se déplacent entre une première position dans laquelle chaque première série d'empreintes 120 n'est pas en vis-à-vis de la série de deuxièmes empreintes 116 correspondante et une deuxième position dans laquelle chaque première série d'empreintes 120 est en vis-à-vis de la série de deuxièmes empreintes 116 correspondante. C'est-à-dire que dans la première position, chaque opercule 204 n'est pas en vis-à-vis du corps 206 correspondant et dans la deuxième position chaque opercule 204 est en vis-à-vis du corps 206 correspondant.

Comme cela est expliqué ci-après, chaque chariot 108 est mis en mouvement par une crémaillère 208 dont l'extrémité est référencée 118. Chaque crémaillère 208 est mise en mouvement par un dispositif d'activation, qui est décrit ci-après comme un vérin pneumatique 104 fixé sur le rail de guidage 102 considéré, mais qui peut être un vérin hydraulique, vérin électrique ou un moteur électrique ou autre. Chaque crémaillère se déplace parallèlement au rail de guidage 102.

Chaque rail de guidage 102 comprend un dispositif de verrouillage 106 dont le fonctionnement est expliqué ci-après et qui coopère avec des rainures de verrouillage. Chaque dispositif de verrouillage 106 est prévu pour verrouiller le chariot 108 alternativement avec la crémaillère 208 et le rail de guidage 102.

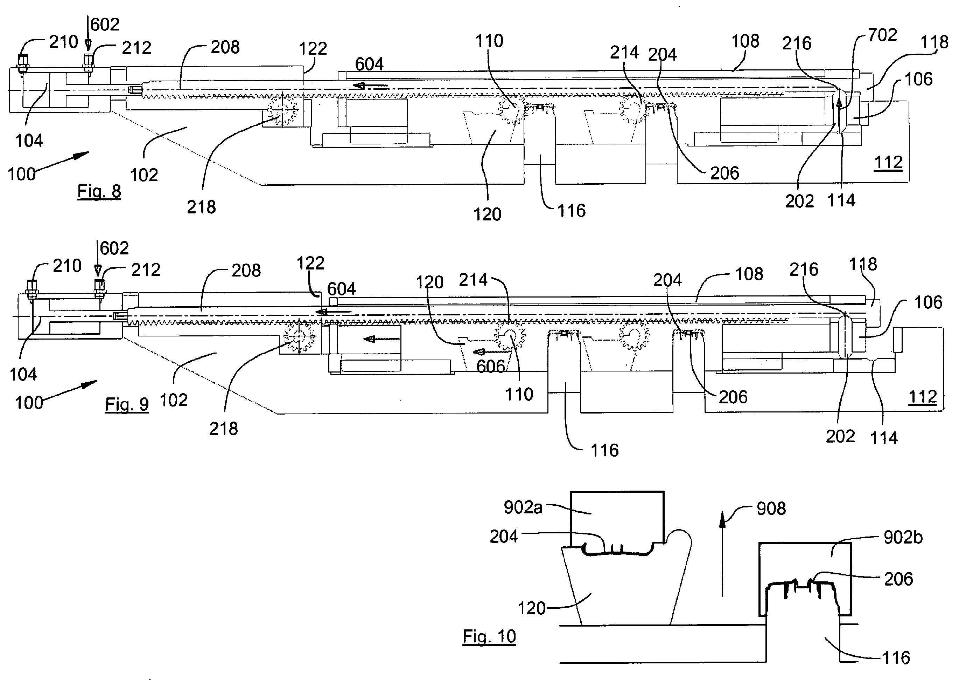

La Fig. 10 représente un mode de réalisation des empreintes de moulage d'un capuchon.

L'opercule 204 est réalisé à partir de la première empreinte 120 qui vient conformer la partie extérieure de l'opercule 204, et d'une autre empreinte, dite la troisième empreinte 902a qui vient conformer la partie intérieure de l'opercule 204, c'est-à-dire la partie qui s'emboîtera ultérieurement sur le corps 206.

Le corps 206 est moulé à partir de la deuxième empreinte de moulage 116 qui vient mouler la partie inférieure du corps 206, c'est-à-dire la partie qui est destinée à s'emboîter ultérieurement sur la bouteille, et d'une autre empreinte, dite la quatrième empreinte 902b qui vient mouler la partie supérieure du corps 206 sur laquelle vient s'emboîter l'opercule 204.

La série de premières empreintes 120 est la série qui est portée par une barre d'assemblage 110. La troisième empreinte 902a et la quatrième .empreinte 902b peuvent former un ensemble monobloc.

Les quatre empreintes 120, 116, 902a et 902b sont associées à la presse à injection qui les alimente en matériaux de moulage.

Après le moulage des capuchons, chaque troisième empreinte 902a et chaque quatrième empreinte 902b sont déplacées dans le sens de la flèche 908 de manière à dégager l'espace dans lequel l'opercule 204 va être déplacé pour s'emboîter sur le corps 206. Chaque opercule 204 repose alors sur une première empreinte 120 et chaque corps repose sur une deuxième empreinte 116.

Les Figs. 2 à 9 représentent les différentes étapes de fonctionnement du système de moulage et d'emboîtement 100.

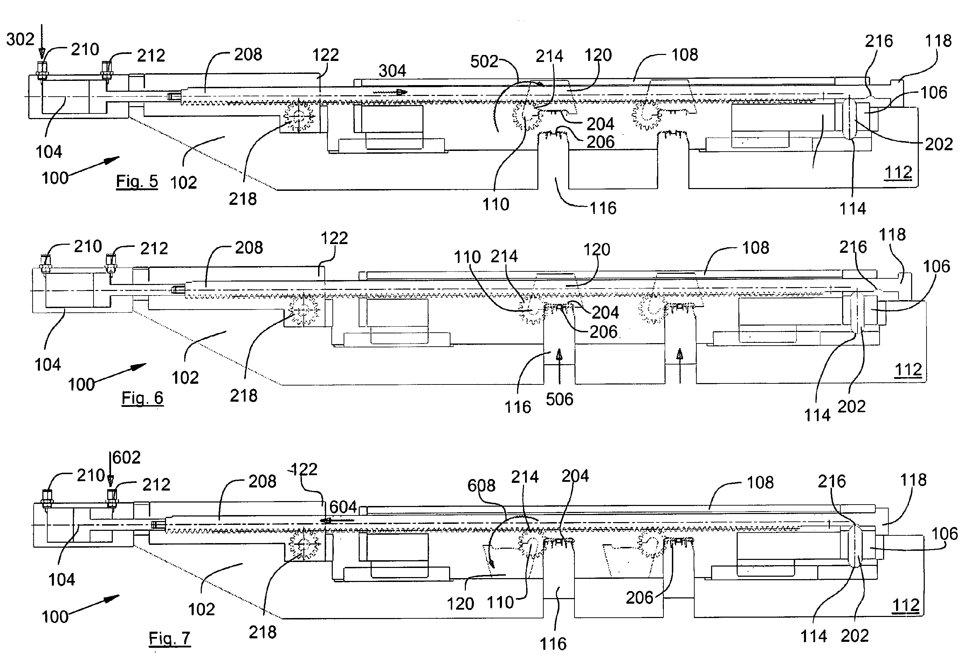

Les Figs. 3, 4, 7 et 8 montrent les barres d'assemblage 110 dans la première position et les Figs. 5 et 6 montrent les barres d'assemblage 110 dans la deuxième position. Les Figs. 2 et 9 montrent le système de moulage et d'emboîtement 100, respectivement, en position de moulage du corps 206 et de l'opercule 204 et en position d'éjection du capuchon.

La Fig. 2 représente le système de moulage et d'emboîtement 100 après le moulage des corps 206 et des opercules 204 et après dégagement des troisièmes empreintes 902a et des quatrièmes empreintes 902b.

Le vérin pneumatique 104 présente une première admission 210 et une deuxième admission 212. Chaque admission 210, 212 est prévue pour être connectée à une source d'air sous pression afin d'activer le vérin pneumatique 104. L'utilisation d'air et non d'huile évite, en cas de fuite, la pollution du poste de travail par de l'huile.

Le vérin pneumatique 104 coopère avec la crémaillère 208. L'admission d'air dans la première admission 210 entraîne le déplacement de la crémaillère dans un premier sens et l'admission d'air dans la deuxième admission 212 entraîne le déplacement de la crémaillère dans un deuxième sens.

Un engrenage de guidage 218 est monté sur le rail de guidage 102 et engrène avec les dents de la crémaillère 208.

Chaque engrenage de manoeuvre 214 engrène avec les dents de la crémaillère 208.

Le dispositif de verrouillage 106 comprend un loquet 202, une première rainure de verrouillage 216 réalisée sur la crémaillère 208 et une deuxième rainure de verrouillage 114 réalisée dans le rail de guidage 102. Le loquet 202 s'engage alternativement dans la première rainure de verrouillage 216 et dans la deuxième rainure de verrouillage 114, de manière à verrouiller le chariot 108 alternativement avec la crémaillère 208 et le rail de guidage 102.

Au cours de l'étape de la Fig. 2, le loquet 202 est verrouillé avec la première rainure de verrouillage 216 rendant solidaire la crémaillère 208 et le chariot 108. Le loquet 202 prend la forme d'un élément oblong dont chaque extrémité rayonnée coopère avec l'une des rainures de verrouillage 114, 216. Lorsqu'une première extrémité rayonnée coopère avec la première rainure de verrouillage 216, la deuxième extrémité rayonnée glisse sur une surface du rail de guidage 102. Lorsque la deuxième extrémité rayonnée coopère avec la deuxième rainure de verrouillage 114, la première extrémité rayonnée glisse sur une surface de la crémaillère 208.

Au cours de l'étape représentée sur la Fig. 3, l'air est admis (flèche 302) dans la première admission 210 du vérin pneumatique 104 qui repousse ainsi la crémaillère 208 (flèche 304). Comme le loquet 202 est verrouillé avec la première rainure de verrouillage 216 par appui de la deuxième extrémité rayonnée sur la surface du rail de guidage 102, le chariot 108 se déplace en translation sur le rail de guidage 102 (flèche 306) et vient en butée contre la butée amont 112. Chaque première empreinte 120 qui porte un opercule 204 et chaque barre d'assemblage 110 suivent le chariot 108. La barre d'assemblage 110 atteint alors la première position, c'est-à-dire la position dans laquelle l'opercule 204 n'est pas en vis-à-vis du corps 206.

Au cours de l'étape représentée sur la Fig. 4, l'air est admis (flèche 302) dans la première admission 210 du vérin pneumatique 104 qui continue ainsi à repousser la crémaillère 208 (flèche 304). Le loquet 202 se déverrouille de la première rainure de verrouillage 216 et se verrouille avec la deuxième rainure de verrouillage 114 (flèche 402) par appui de la première extrémité rayonnée sur la surface de la crémaillère 208.

Au cours de l'étape représentée sur la Fig. 5, l'air est admis (flèche 302) dans la première admission 210 du vérin pneumatique 104 qui continue ainsi à repousser la crémaillère 208 (flèche 304).

Comme le loquet 202 est déverrouillé d'avec la première rainure de verrouillage 216, la crémaillère 208 continue à avancer. Comme le loquet 202 est verrouillé avec la deuxième rainure de verrouillage 114, le chariot 108 reste immobile. La poursuite du mouvement de la crémaillère 208 entraîne la rotation des engrenages de manoeuvre 214 et donc la rotation des barres d'assemblage 110 et des premières empreintes 120 (flèche 502). Les barres d'assemblages 110 atteignent alors la deuxième position, dans laquelle l'opercule 204 est en vis-à-vis du corps 206.

La position de la butée amont 112 est donc étudiée de manière à ce que, au moment de la rotation des barres d'assemblage 110, l'opercule 204 vient en vis-à-vis du corps 206 sur lequel il doit être emboîté.

Au cours de l'étape représentée sur la Fig. 6, la deuxième empreinte 116 qui porte le corps 206 se déplace en direction de l'opercule 204, c'est-à-dire en direction de la première empreinte 120 (flèche 506). Cette translation qui est sensiblement verticale permet l'emboîtement de l'opercule 204 sur le corps 206. A cette fin, la deuxième empreinte 116 est montée mobile entre une position basse dans laquelle l'opercule 204 et le corps 206 ne sont pas emboîtés (Figs. 2, 3 et 4) et une position haute dans laquelle l'opercule 204 et le corps 206 sont emboîtés (Figs. 6, 7, 8 et 9).

Au cours de l'étape représentée sur la Fig. 7, l'air est admis (flèche 602) dans la deuxième admission 212 du vérin pneumatique 104 qui attire ainsi la crémaillère 208 (flèche 604). Comme le loquet 202 est verrouillé avec la deuxième rainure de verrouillage 114, le chariot 108 reste immobile et la crémaillère 208 se déplace sans déplacer le chariot 108.

Le mouvement de la crémaillère 208 entraîne la rotation des engrenages de manoeuvre 214 et donc la rotation des barres d'assemblage 110 et des premières empreintes 120 (flèche 608) qui reviennent alors dans la première position. Chaque opercule 204 se détache de la première empreinte 120 qui la porte au cours de cette rotation.

Au cours de l'étape représentée sur la Fig. 8, l'air est admis (flèche 602) dans la deuxième admission 212 du vérin pneumatique 104 qui continue ainsi à attirer la crémaillère 208 (flèche 604). Le loquet 202 se déverrouille de la deuxième rainure de verrouillage 114 et se verrouille avec la première rainure de verrouillage 216 (flèche 702).

Au cours de l'étape représentée sur la Fig. 9, l'air est admis (flèche 602) dans la deuxième admission 212 du vérin pneumatique 104 qui continue ainsi à attirer la crémaillère 208 (flèche 604). Comme le loquet 202 est verrouillé avec la première rainure de verrouillage 216, le chariot 108 se déplace en translation sur le rail de guidage 102 (flèche 606) et vient en butée contre la butée aval 122. Chaque première empreinte 120 et chaque barre d'assemblage 110 suivent le chariot 108 et reviennent dans leur position de départ de la Fig. 2.

Chaque capuchon ainsi réalisé peut être éjecté de la deuxième empreinte 116 qui retourne dans sa position de départ de la Fig. 2. Un nouveau cycle d'injection/moulage, d'emboîtement et d'éjection peut avoir lieu.

La réalisation du système de moulage et d'emboîtement 100 est particulièrement simple et son fonctionnement est facile à gérer car il y a, par rail de guidage 102, un seul élément à commander, il s'agit du vérin pneumatique 104. Le déplacement des deuxièmes empreintes 116 peut être commandé par tous moyens adéquats.

Ainsi, pour chaque crémaillère 208, le dispositif d'activation 104 déplace la crémaillère 208, d'une part, dans le premier sens 304 de manière à amener chaque chariot 108 en butée contre sa butée amont 112 lorsque le dispositif de verrouillage 106 verrouille le chariot 108 avec la crémaillère 208, puis, lorsque le dispositif de verrouillage 106 verrouille le chariot 108 avec le rail de guidage 102, de manière à faire subir à chaque engrenage de manoeuvre 214 une rotation qui amène chaque série de premières empreintes 120 de la première position à la deuxième position, mouvement au cours duquel, chaque première empreinte 120 entraîne l'opercule 204 vers une position en vis-à-vis du corps 206, et, d'autre part, dans le deuxième sens 604 de manière, lorsque le dispositif de verrouillage 106 verrouille le chariot 108 avec le rail de guidage 102, à faire subir à chaque engrenage de manoeuvre 214 une rotation qui ramène chaque série de premières empreintes 120 de sa deuxième position à sa première position, puis, lorsque le dispositif de verrouillage 106 verrouille le chariot 108 avec la crémaillère 208, de manière à amener chaque chariot 108 en butée contre sa butée aval 122.

Après le moulage des capuchons 204, 206 et le dégagement de la troisième empreinte 902a et de la quatrième empreinte 902b, le procédé d'emboîtement du corps 206 et de l'opercule 204 comprend:
- une étape de déplacement en translation des chariots 108 et des premières empreintes 120 qui y sont liées jusqu'à la première position,
- une étape d'arrêt du déplacement lorsque les premières empreintes 120 sont correctement positionnées, c'est-à-dire lorsque chaque première empreinte 120 est au voisinage de la deuxième empreinte 116 associée, cette position correspondant à la mise en butée des chariots 108 contre les butées amont 112,

- une étape de mise en rotation des premières empreintes 120 qui passent dans la deuxième position,
- une étape d'arrêt de la rotation lorsque les premières empreintes 120 ont suffisamment tourné pour que chaque opercule 204 soit en vis-à-vis du corps 206 correspondant,
- une étape de relèvement de la deuxième empreinte 116 de manière à ce que le corps 206 et l'opercule 204 s'emboîtent,
- une étape de mise en rotation selon un sens de rotation inverse des premières empreintes 120,
- une étape d'arrêt de la rotation en sens inverse lorsque les premières empreintes 120 sont revenues dans la première position,
- une étape de déplacement en translation des chariots 108 et des premières empreintes 120 dans une direction opposée à la première étape de déplacement,
- une étape d'arrêt du déplacement lorsque les chariots 108 sont en butée contre les butées aval 122, et
- une étape d'abaissement de chaque deuxième empreinte 116.

Chaque capuchon ainsi réalisé peut alors être éjecté de la deuxième empreinte 116.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas d'un capuchon mais elle s'applique de la même manière à tout élément comportant deux pièces moulées devant être assemblées ensemble, en particulier, l'invention s'applique de la même manière si la position du corps et la position de l'opercule sont inversées.

L'invention a été plus particulièrement décrite dans le cas de deux rails de guidage, mais elle s'applique de la même manière si il y a plus de deux rails de guidage, chacun portant un chariot mobile mis en mouvement par un dispositif d'activation. Ainsi, pour chaque série de premières empreintes 120 et pour chaque chariot 108, un engrenage de manoeuvre 214 est monté sur ledit chariot 108 et est mobile en rotation autour d'un axe de rotation perpendiculaire à la direction de déplacement des chariots 102 et la série de premières empreintes 120 est montée sur chacun des engrenages de manoeuvre 214 des chariots 108 qui sont associés à ladite série de premières empreintes 120.

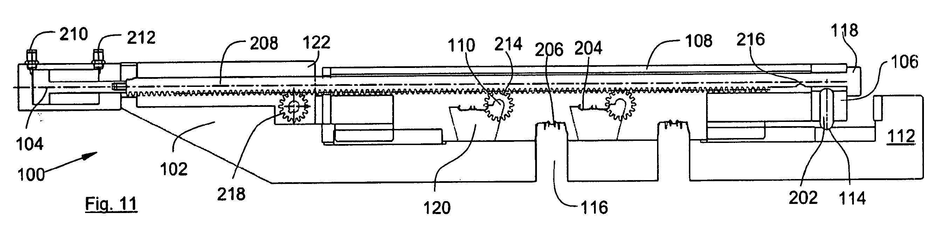

L'invention a été plus particulièrement décrite dans le cas où la translation des chariots 108 est réalisée préalablement à la rotation des engrenages de manoeuvre 214. Mais dans un autre mode de réalisation représenté sur la Fig. 11, la rotation des engrenages de manoeuvre 214 est réalisée préalablement à la translation des chariots 108. La différence entre le mode de réalisation de la Fig. 11 et celui de Figs. précédentes réside dans les positions de la première rainure de verrouillage 216 réalisée sur la crémaillère 208 et de la deuxième rainure de verrouillage 114 réalisée dans le rail de guidage 102.

Initialement, le dispositif de verrouillage 106 verrouille ledit chariot 108 avec le rail de guidage 102 par l'intermédiaire du loquet 202 qui est en prise avec la deuxième rainure de verrouillage 114.

La translation de la crémaillère 208 entraîne alors la rotation des chariots 108 et des premières empreintes 120 qui viennent se placer dans une première position dans laquelle elles sont renversées sans être en vis-à-vis des deuxièmes empreintes 116. Lorsque la rotation est terminée et que les premières empreintes 120 sont dans cette première position, le dispositif de verrouillage 106 bascule et le loquet 202 se déverrouille de la deuxième rainure de verrouillage 114 et se verrouille avec la première rainure de verrouillage 216.

La poursuite de la translation de la crémaillère 208 entraîne la translation des chariots 108 et des premières empreintes 120 qui viennent dans une deuxième position en vis-à-vis des deuxièmes empreintes 116, c'est-à-dire dans la même position que celle représentée sur la Fig. 5, c'est-à-dire lorsque le chariot 108 vient en butée contre la butée amont 112.

Le processus se poursuit alors par le déplacement de la deuxième empreinte 116 qui porte le corps 206 en direction de l'opercule 204, c'est-à-dire en direction de la première empreinte 120.

Le retour en position initiale des premières empreintes 120 s'effectue de la manière inverse.

Ainsi, pour chaque crémaillère 208, le dispositif d'activation 104 est prévu pour déplacer la crémaillère 208, d'une part, dans un premier sens, de manière à faire pivoter chaque série de premières empreintes 120 dans sa première position renversée mais non en vis-à-vis de la série de deuxièmes empreintes 116 correspondante, lorsque le dispositif de verrouillage 106 verrouille le chariot 108 avec le rail de guidage 102, puis lorsque le dispositif de verrouillage 106 verrouille le chariot 108 avec la crémaillère 208, à amener chaque chariot 108 en butée contre sa butée amont 112, de manière à amener chaque série de premières empreintes 120 en vis-à-vis de la série de deuxièmes empreintes 116 correspondante, et, d'autre part, dans un deuxième sens, de manière à amener chaque chariot 108 en butée contre sa butée aval 122, lorsque le dispositif de verrouillage 106 verrouille le chariot 108 avec la crémaillère 208, puis lorsque le dispositif de verrouillage 106 verrouille le chariot 108 avec le rail de guidage 102 à faire subir à chaque engrenage de manoeuvre 214 une rotation qui ramène chaque série de premières empreintes 120 de sa première position renversée à sa position initiale.

## Revendications

1. Système de moulage et d'emboîtement (100) d'une première pièce (204) et d'une deuxième pièce (206), le système de moulage et d'emboîtement (100) comprenant :
- au moins deux rails de guidage (102) parallèles,
- pour chaque rail de guidage (102), un chariot (108) monté mobile en translation sur le rail de guidage (102) entre une butée aval (122) et une butée amont (112),
- au moins une série de premières empreintes (120), chaque première empreinte (120) étant destinée à mouler une des premières pièces (204), chaque série de premières empreintes (120) étant portée par une barre d'assemblage (110),
- pour la ou chaque barre d'assemblage (110) et pour chaque chariot (108), un engrenage de manoeuvre (214) monté sur ledit chariot (108) et mobile en rotation autour d'un axe de rotation perpendiculaire à la direction de déplacement des chariots (102), ladite barre d'assemblage (110) étant montée sur chacun des engrenages de manoeuvre (214),
- pour la ou chaque série de premières empreintes (120), une série de deuxièmes empreintes (116), chaque deuxième empreinte (116) étant destinée à mouler une des deuxièmes pièces (206),
- chaque barre d'assemblage (110) étant mobile en rotation entre une première position dans laquelle chaque première série d'empreintes (120) n'est pas en vis-à-vis de la série de deuxièmes empreintes (116) correspondante et une deuxième position dans laquelle chaque première série d'empreintes (120) est en vis-à-vis de la série de deuxièmes empreintes (116) correspondante, et chaque série de deuxièmes empreintes (116) étant montée mobile entre une position basse dans laquelle la première pièce (204) et la deuxième pièce (206) ne sont pas emboîtées et une position haute dans laquelle la première pièce (204) et la deuxième pièce (206) sont emboîtées,
- pour chaque chariot (108), une crémaillère (208) prévue pour se déplacer parallèlement audit rail de guidage (102) et pour engrener le ou les engrenages de manoeuvre (214) dudit chariot (108),
- pour chaque chariot (108), un dispositif de verrouillage (106) prévu pour verrouiller ledit chariot (108) alternativement avec la crémaillère (208) et le rail de guidage (102),
- pour chaque crémaillère (208), un dispositif d'activation (104) prévu pour déplacer ladite crémaillère (208).

2. Système de moulage et d'emboîtement (100) selon la revendication 1, **caractérisé en ce que** le dispositif de verrouillage (106) comprend un loquet (202), une première rainure de verrouillage (216) réalisée sur la crémaillère (208) et une deuxième rainure de verrouillage (114) réalisée sur le rail de guidage (102), et **en ce que** le loquet (202) est prévu pour s'engager alternativement dans la première rainure de verrouillage (216) ou la deuxième rainure de verrouillage (114).

3. Système de moulage et d'emboîtement (100) selon la revendication 2, **caractérisé en ce que** le loquet (202) prend la forme d'un élément oblong et **en ce que** lorsque une première extrémité rayonnée coopère avec la première rainure de verrouillage (216), la deuxième extrémité rayonnée est en appui sur une surface du rail de guidage (102), et **en ce que** lorsque la deuxième extrémité rayonnée coopère avec la deuxième rainure de verrouillage (114), la première extrémité rayonnée est en appui sur une surface de la crémaillère (208).

4. Système de moulage et d'emboîtement (100) selon l'une des revendications 1 à 3, **caractérisé en ce que** chaque dispositif d'activation (104) est un vérin pneumatique.

5. Système de moulage et d'emboîtement (100) selon l'une des revendications 1 à 3, **caractérisé en ce que** les premières pièces ou les deuxièmes pièces sont des opercules (204) d'un capuchon et **en ce que**, respectivement, les deuxièmes pièces ou les premières pièces sont des corps (206) du capuchon.

## Patentansprüche

1. System zum Gießen und Ineinanderstecken (100) eines ersten (204) und zweiten Teils (206), das System zum Gießen und Ineinanderstecken (100) umfassend:
- wenigstens zwei parallele Führungsschienen (102),
- für jede Führungsschiene (102) einen, auf der Führungsschiene (102), zwischen einem nachgelagerten Anschlag (122) und einem vorgelagerten Anschlag (112) translationsbeweglich montierten Schlitten (108),
- wenigstens eine Reihe erster Kavitäten (120), wobei jede erste Kavität (120) dazu bestimmt ist, eines der ersten Teile (204) zu gießen, wobei jede Reihe erster Kavitäten (120) von einer Montierstange (110) getragen wird,
- für die oder jede Montierstange (110) und für jeden Schlitten (108), ein Betätigungsgetriebe (214), das auf dem genannten Schlitten (108) montiert und drehbeweglich um eine, senkrecht zur Bewegungsrichtung der Schlitten (102) verlaufende Drehachse ist, wobei die genannte Montierstange (110) auf jedem der Betätigungsgetriebe (214) montiert ist,
- für die oder jede Reihe erster Kavitäten (120), eine Reihe zweiter Kavitäten (116), wobei jede zweite Kavität (116) dazu bestimmt ist, eines der zweiten Teile (206) zu gießen,
- wobei jede Montierstange (110) zwischen einer ersten Position, in der jede erste Reihe Kavitäten (120) sich nicht gegenüber der entsprechenden Reihe zweiter Kavitäten (116) befindet, und einer zweiten Position, in der jede erste Reihe Kavitäten (120) sich gegenüber der entsprechenden Reihe zweiter Kavitäten (116) befindet, drehbeweglich ist und jede Reihe zweiter Kavitäten (116) zwischen einer unteren Position, in der das erste (204) und zweite Teil (206) nicht ineinandergesteckt werden und einer oberen Position, in der das erste (204) und zweite Teil (206) ineinandergesteckt werden, beweglich ist,
- für jeden Schlitten (108) eine Zahnstange (208), die dafür vorgesehen ist, sich parallel zu der genannten Führungsschiene (102) zu bewegen und in das oder die Betätigungsgetriebe (214) des genannten Schlittens (108) einzugreifen,
- für jeden Schlitten (108), eine Verriegelungsvorrichtung (106), die dafür vorgesehen ist, den genannten Schlitten (108) alternierend mit der Zahnstange (208) und der Führungsschiene (102) zu verriegeln,
- für jede Zahnstange (208) eine Aktivierungsvorrichtung (104), die dafür vorgesehen ist, die genannte Zahnstange (208) zu bewegen.

2. System zum Gießen und Ineinanderstecken (100) nach Patentanspruch 1, **dadurch gekennzeichnet, dass** die Verriegelungsvorrichtung (106) eine Arretierung (202), eine erste, auf der Zahnstange (208) ausgebildete Verriegelungsnut (216) und eine zweite, auf der Führungsschiene (102) ausgebildete Verriegelungsnut (114) umfasst und dadurch, dass die Arretierung (202) vorgesehen ist, um alternierend in die erste (216) oder zweite Verriegelungsnut (114) einzugreifen.

3. System zum Gießen und Ineinanderstecken (100) nach Patentanspruch 2, **dadurch gekennzeichnet, dass** die Arretierung (202) die Form eines länglichen Elements aufweist und dadurch, dass das zweite gerillte Ende auf einer Oberfläche der Führungsschiene (102) aufliegt, wenn das erste gerillte Ende mit der ersten Verriegelungsnut (216) zusammenwirkt, und dadurch, dass das erste gerillte Ende auf einer Oberfläche der Zahnstange (208) aufliegt, wenn das zweite gerillte Ende mit der zweiten Verriegelungsnut (114) zusammenwirkt.

4. System zum Gießen und Ineinanderstecken (100) nach einem der Patentansprüche 1 bis 3, **dadurch gekennzeichnet, dass** jede Aktivierungsvorrichtung (104) ein Pneumatikzylinder ist.

5. System zum Gießen und Ineinanderstecken (100) nach einem der Patentansprüche 1 bis 3, **dadurch gekennzeichnet, dass** die ersten oder zweiten Teile Deckel (204) einer Verschlusskappe sind und dadurch, dass die zweiten oder ersten Teile jeweils die Körper (206) der Verschlusskappe sind.

## Claims

1. System (100) for moulding and fitting a first part (204) and a second part (206), the moulding and fitting system (100) comprising:
- at least two parallel guide rails (102);
- for each guide rail (102), a carriage (108) which is fitted such as to be mobile in translation on the guide rail (102), between a downstream stop (122) and an upstream stop (112);
- at least one first series of moulds (120), each first mould (120) being designed to mould one of the first parts (204), each first series of moulds (120) being supported by an assembly bar (110);
- for the or each assembly bar (110) and for each carriage (108), a manoeuvring gear (214) which is fitted on said carriage (108) and is mobile in rotation around an axis of rotation perpendicular to the direction of displacement of the carriages (102), said assembly bar (110) being fitted on each of the manoeuvring gears (214);
- for the or each first series of moulds (120), a second series of moulds (116), each second mould (116) being designed to mould one of the second parts (206);
- each assembly bar (110) being mobile in rotation between a first position, in which each first series of moulds (120) is not opposite the corresponding second series of moulds (116), and a second position in which each first series of moulds (120) is opposite the corresponding second series of moulds (116), and each second series of moulds (116) being fitted such as to be mobile between a low position, in which the first part (204) and the second part (206) are not fitted together, and a high position in which the first part (204) and the second part (206) are fitted together;
- for each carriage (108), a rack (208) which is designed to be displaced parallel to said guide rail (102), and to engage the manoeuvring gear(s) (214) of said carriage (108);
- for each carriage (108), a locking device (106) which is designed to lock said carriage (108) alternatively with the rack (208) and the guide rail (102);
- for each rack (208), an activation device (104) which is designed to displace said rack (208).

2. Moulding and fitting system (100) according to claim 1, **characterized in that** the locking device (106) comprises a catch (202), a first locking groove (216) provided in the rack (208), and a second locking groove (114) provided in the guide rail (102), and **in that** the catch (202) is designed to engage alternatively in the first locking groove (216) or the second locking groove (114).

3. Moulding and fitting system (100) according to claim 2, **characterized in that** the catch (202) is in the form of an oblong element, and **in that**, when a first rounded end cooperates with the first locking groove (216), the second rounded end is supported on a surface of the guide rail (102), and **in that**, when the second rounded end cooperates with the second locking groove (114), the first rounded end is supported on a surface of the rack (208).

4. Moulding and fitting system (100) according to one of claims 1 to 3, **characterized in that** each activation device (104) is a pneumatic jack.

5. Moulding and fitting system (100) according to one of claims 1 to 3, **characterized in that** the first parts or the second parts are lids (204) of a cap, and **in that**, respectively, the second parts or the first parts are bodies (206) of the cap.
